Europäisches Patentamt

**European Patent Office**

Office européen des brevets

(11) Publication number: **0 094 811**
A2

# (12) EUROPEAN PATENT APPLICATION

(21) Application number: **83302727.9**

(22) Date of filing: **13.05.83**

(51) Int. Cl.³: **B 65 G 53/08**

(30) Priority: **14.05.82 US 378472**

(43) Date of publication of application:
**23.11.83 Bulletin 83/47**

(84) Designated Contracting States:
**AT BE CH LI NL SE**

(71) Applicant: **WORLD INSTITUTE OF TECHNOLOGY**
**4009 C Bridgeport Way West**
**Tacoma Washington(US)**

(72) Inventor: **Lovejoy, Billy Brent**
**4213 Arbordale Avenue West**
**Tacoma Washington 98466(US)**

(74) Representative: **Sawers, Lawrence Peter et al,**
**PAGE, WHITE & FARRER 5 Plough Place New Fetter**
**Lane**
**London EC4A 1HY(GB)**

(54) Apparatus and method for conveying different types of material.

(57) An apparatus for conveying a plurality of different types of material in a conveying pipe (26) includes a means (6,2,62) for supplying the material to the end of a supply conduit (16), a means (20,22,70) for creating a continuous air flow which includes a low pressure air flow around an entire end of the supply conduit at a predetermined air velocity, a substantially zero velocity thin air boundary around an inside surface of the length of the conveying pipe and a high velocity air flow throughout the remainder of the conveying pipe and a means (62) for introducing the material supplied to the end of the supply conduit into the low pressure air flow whereby the material is conveyed into the high velocity air flow and through the conveying pipe.

FIG. 6

## APPARATUS AND METHOD FOR CONVEYING DIFFERENT TYPES OF MATERIAL

This invention relates to apparatus for conveying materials and more particularly to an apparatus for conveying a plurality of different types of materials in a pipe.

In the prior art there exists a multitude of devices for conveying material. Each of these devices is particularly suited to convey certain materials. In particular, if one wants to convey rock, the rock can be conveyed by means of such standard devices as conveyor belts and long augers. However, such devices are inefficient, require large amounts of power and space and are very expensive. In addition, with the advent of environmental considerations, such devices also create a substantial amount of pollution and are therefore undesirable.

If one desires to convey a liquid such as water or oil, the standard method is to utilise some sort of a positive displacement or impeller pump which pressurizes the liquid and forces it down a pipe at a high pressure. Such systems for pumping liquids have certain disadvantages in that the seals must be very tight to prevent a leak, the pipe and pump must be sufficiently strong to withstand the pressure applied to the liquid and the seals in the joints must also be strong enough for the pumping pressures. In addition, such systems for pumping liquids have additional disadvantages in that they are inefficient, expensive to install and expensive to maintain.

In the prior art if one desires to convey a powdery material such as flour or cement, the usual device includes some type of positive displacement pump for forcing the powdery material into a pipe and a very high pressure, high velocity pnuematic liquid in the pipe. Such devices possess certain disadvantages in that the pipe must be strong enough to withstand the pressure applied, require a significant amount of horsepower to convey the material, and are subjected to a great amount of wear since the material as it is conveyed contacts the inside of the pipe and is pressed against it and is in contact with the working of the pump and has even higher wear points wherever the pipe is bent or turned. Accordingly, such systems are expensive to maintain since the pump must be replaced regularly and in particular, those positions of the pipe which are turned or bent must be replaced even more often. Also, such systems are very expensive because the pipe must be made from material which is harder than the materials to be conveyed and must possess a high wear resistance.

Another method for conveying powdered materials is shown in U.S. Patent No. 1,553,539. In this patent an auger is utilized to force the material into a high pressure air stream. While this United States patent claims to be able to convey any type of pulverized material, it is presently only capable of conveying powdered portland cement. In addition, this system has most of the disadvantages of the system described above in that there is substantial amount of wear on the auger and the conveying pipe which requires continual expensive maintainence and replacement of the parts. Furthermore, the apparatus for conveying pulverized material can only convey pulverized material such as a powder and cannot be tailored or adapted to convey any other type of material.

From the above it should be apparent that no device which exists in the prior art is capable of efficiently, and economically conveying any material. Furthermore, it should be very clear that no apparatus which exists in the prior art is capable of being tailored to or adapted to convey a plurality of different types of material.

Accordingly, it is a general object of the present invention to provide an apparatus capable of conveying a plurality of different types of materials such as liquids, semi-liquids, semi-solids, powders and other solid objects.

It is still another object of the present invention to provide an apparatus for conveying a plurality of different types of materials which is inexpensive to install and operate.

It is yet another object of the present invention to provide an apparatus for conveying a plurality of types of materials which substantially reduces the wear and tear on the component parts and therefore the maintainence costs.

It is another object of the present invention to provide an apparatus for conveying a plurality of different types of materials which prevents contamination of material to be conveyed.

It is yet another object of the present invention to provide an apparatus for conveying a plurality of different types of materials in a pipe over relatively long distances.

In keeping with the principles of the present invention, the objects are accomplished by a unique apparatus for conveying a plurality of different types of materials in a conveying pipe. The apparatus includes a means for supplying the material to the end of a supply conduit at a predetermined rate, a means for creating a continuous air flow which includes a low pressure air flow around the entire end of a supply conduit at a predetermined air velocity, a substantially zero velocity thin air boundary layer around an inside surface of the length of the conveying pipe and a high velocity air flow throughout the remainder of the conveying pipe and a means for introducing the material supplied to the end of the supply conduit into the low pressure air flow at a predetermined volumetric ratio of material to air and such that the material has a velocity substantially equal to the predetermined air velocity of the low pressure air flow, whereby the material is conveyed into the high velocity air flow and to the end of the conveying pipe.

Specific embodiments of the present invention will now be described in more detail with reference to the accompanying drawings, wherein like reference numerals denote like elements and in which:

FIGURE 1 is an external view of an apparatus for conveying a plurality of material in accordance with the teachings of the present invention;

FIGURE 2 is an end view of the cradle and barrel assembly utilized in the apparatus of Figure 1;

FIGURE 3 is a side view of the cradle and barrel straightening assembly of the apparatus in Figure 1;

FIGURE 4 is an exterior view of the barrel and air chamber of the apparatus shown in Figure 1;

FIGURE 5 is an end view of the apparatus of Figure 1;

FIGURE 6 is a cross-sectional view of the apparatus of Figure 1;

FIGURE 7 is a baffle utilized in the air chamber of the apparatus of the present invention;

FIGURE 8 is a partial cut-away view illustrating how the material is conveyed inside the barrel of the present invention;

FIGURE 9 is a graph illustrating the velocity distribution of the air flow across the diameter of the conveying pipe of the present invention;

FIGURE 10 is a partial cross-sectional view illustrating the end of the auger barrel in operation;

FIGURES 11 and 12 are end view of the apparatus of the present invention, illustrating alternate placements of the air supply pipes in the present invention;

FIGURE 13 is a partial cross-sectional view illustrating an additional feature of the apparatus for the present invention;

FIGURE 14 is a partial cross-sectional view illustrating another additional feature of the apparatus of the present invention;

FIGURES 15A, 15B and 15C illustrate choppers utilized in the construction;

FIGURE 16 is a partial cross-sectional view of the end of the auger barrel and of the air chamber which illustrates another construction of the apparatus of the present invention;

FIGURES 17 and 18 are respectively side and top views illustrating a feeder and regulator for the apparatus of the present invention;

FIGURE 19 is a partial cross-sectional view of the apparatus of the present invention illustrating another feature of the present invention;

FIGURE 20 is an exterior view of the air chamber and conveying pipe illustrating another construction of the present invention;

FIGURE 21 is a second embodiment of an apparatus in accordance with the teachings of the present invention;

FIGURE 22 is a cross-sectional view along the line 22-22 in Figure 21; and

FIGURE 23 is a third embodiment of an apparatus in accordance with the teachings of the present invention.

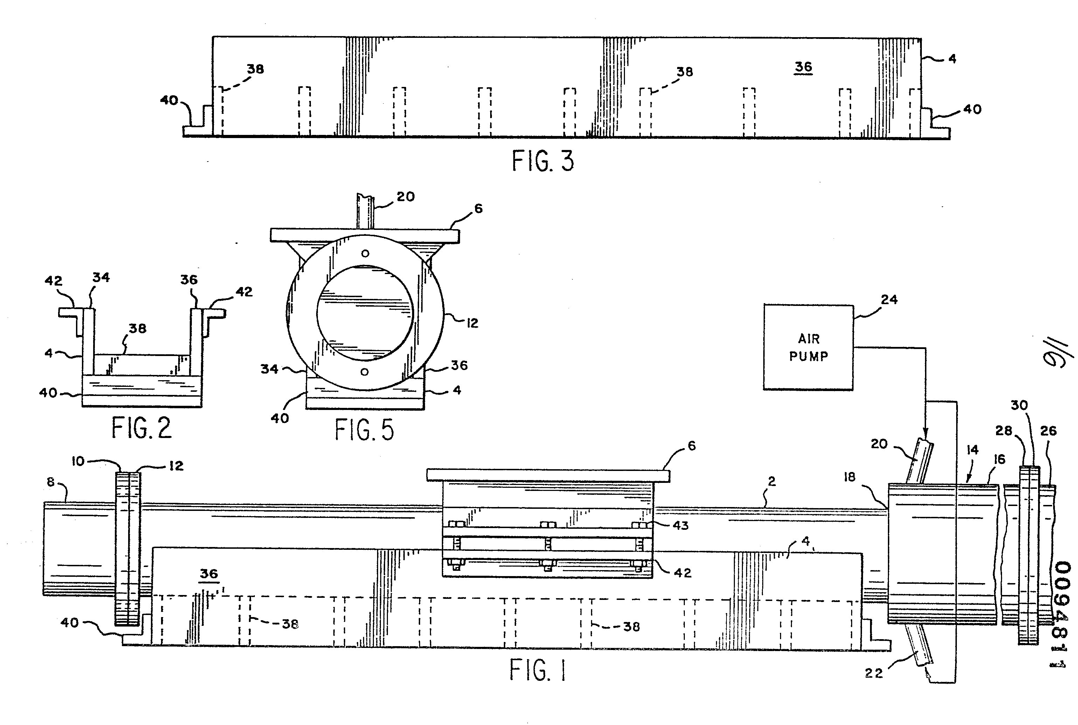

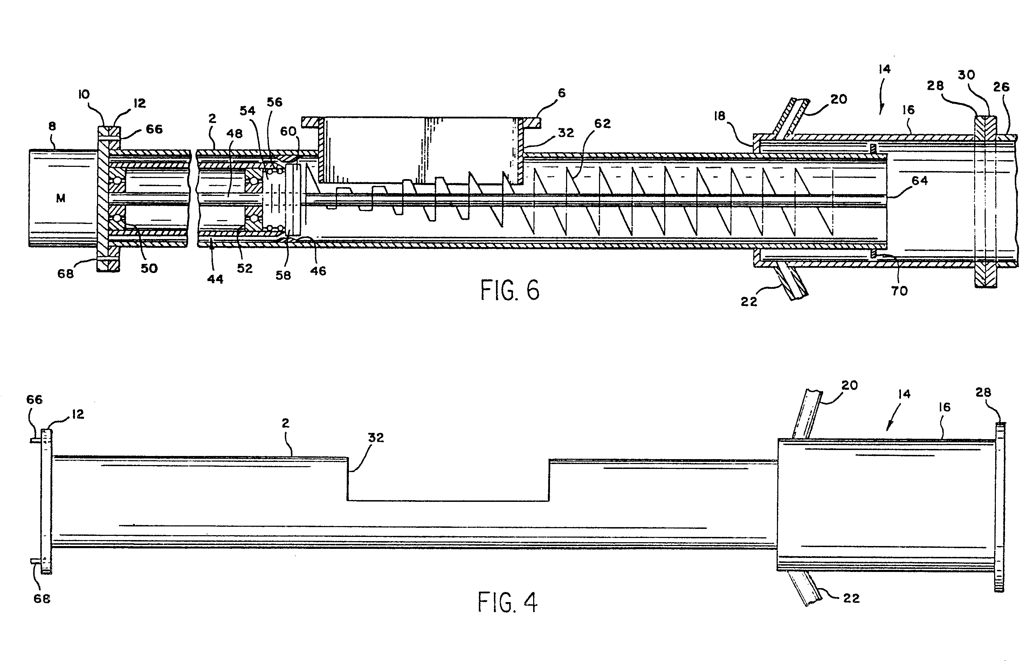

Referring more particularly to the figures, shown in Figures 1 through 7 is a conveying apparatus in accordance with the teachings of the present invention. Referring particularly to Figure 1, the apparatus in accordance with the teachings of the present invention includes an auger barrel 2 which is supported by a cradle and barrel straightening assembly 4. Provided along the top of the barrel 2 is a feed hopper 6 which is bolted to the cradle and barrel straightening assembly 4. At one end of the barrel 2 is provided an auger motor 8 which is coupled to the barrel 2 utilizing a flange 10 and a flange 12 on the barrel 2.

At the other end of the barrel 2 is provided an air chamber 14 which consists of a closed pipe 16 which is larger in diameter than the barrel 2. The pipe 16 is coaxial with the barrel 2 and is sealed to the barrel 2 at the closed end 18. The air chamber 14 is further fed by air pipes 20 and 22 which are connected to the air chamber 14. An air pump 24 provides large volumes of low pressure air to the air pipes 20 and 22. The end of the air chamber 14 is coupled to a conveying pipe 26 by way of flanges 28 and 30 provided respectively on the pipe 16 and the conveying pipe 26. The diameter of the conveying pipe 26 should be 1.0 to 1.5 times the diameter of the auger barrel 2. The barrel 2 is further provided with a longitudinal and generally rectangular shaped material cutout 32 into which the hopper 6 fits.

In the present invention, the rigidity, straightness and positional relationship of the various parts are very important. Therefore, the cradle and barrel straightening assembly 4 is the basic building block upon which the whole systems rests. Since the cradle and barrel straightening assembly 4 is so important to the rigidity and straightness, in the following paragraphs is a description of the construction of the cradle and barrel straightening assembly 4.

The assembly 4 consists of side plates 34 and 36. Provided between the side plates 34 and 36 are a plurality of location gussets 38. The length of the location gussets 38 is selected to be the outside diameter of the barrel 2 so that the side plates 34 and 36 can securely fit around and hold the barrel 2. In addition, the location gussets 38 are placed such that the top surface of each gusset 38 lies in the same plane. To the ends of the side plates 34 and 36 are welded clamp downs 40 which consist of angle iron. Hopper mounting brackets 42 are provided on each side plate 34 and 36 which consists of angle iron. Corresponding hopper mounting brackets 44 are also provided on the hopper 6.

To couple the auger barrel 2 to the cradle and barrel straightening assembly 4, the barrel 2 is first laid in the cradle assembly 4 and lying on the location gussets 38. The hopper 6 is then placed on the barrel 2 in the material cutout 32 and bolts are inserted through the hopper mounting brackets 42 and 43. When the bolts are tightened the barrel 2 is securely fixed to the cradle and barrel straightening assembly 4 and also any warps in the barrel 2 caused by welding and cutting are eliminated by the straightening action of the location gussets 38 when the hopper 6 is securely and tightly coupled to the assembly 4.

Referring particularly to Figure 6, shown therein is a cross-sectional view of the interior of the apparatus in accordance with the teachings of the present invention. In particular, the apparatus includes a bearing cartridge assembly 44 which slides inside of the barrel 2. The bearing cartridge assembly 44 is connected to the flange 10 which also supports the motor 8. The other end of the bearing and cartridge assembly is supported by an alignment ring 46. The alignment ring is trapazoidal in cross-section and one sloped surface on the alignment ring 46 engages with a sloped surface provided on the end of the bearing cartridge assembly 44. The auger shaft 48 goes through the bearing cartridge 44 and is coupled to the motor 8. As the auger shaft 48 passes through the bearing cartridge 44, the auger shaft 48 is supported by bearings 50 and 52. A light free seal is also provided around the auger shaft 48 between the bearings 52 and the end of the bearing cartridge 44. O-rings 56 are provided between the light free seal and the interior surface of the bearing cartridge 44. Next a Teflon (Registered Trade Mark) polytetrafluoroethylene (PTFE) plate 58 is coupled to the auger shaft 48 and engages against the end of the bearing cartridge 44. A flinger plate 60 is then provided between the Teflon plate 58 and the left hand end (as seen in Figure 6) of the auger 62. The flinger plate 60 presses up against the Teflon plate 58.

The flinger plate 60, Teflon plate 58, light free seal 54, and O-rings 56 are provided to prevent material which is to be conveyed from entering the bearing cartridge assembly 44. The flinger plate 60 is designed to spin with the auger shaft 48 and fling any material which comes in contact with the front surface of the flinger plate 60 to the right in the Figure 6 (in the direction of the discharge end of the auger barrel). The Teflon plate 58 also rotates with the auger shaft 48 and engages against the end of the bearing cartridge 44 and the flinger plate 60 presses the Teflon plate 58 solidly into engagement with the end of the cartridge 44. Therefore, even if the Teflon plate 58 wears, engagement is always maintained between the Teflon plate 58 and the end of the bearing cartridge and material is prevented from getting into the bearing cartridge 44. In addition, the light free seal 54 together with the O-rings 56 supply an additional barrier to any material and there are particularly effective against very fine particles.

In the present invention, it is particularly important that the end 64 of the auger shaft 48 be slightly above the center line of the barrel 2. This is so that under the load of gravity and the load of the material to be conveyed, the end 64 of the auger shaft 48 does not sag below the center line of the barrel 2. This is accomplished by a combination of the previously discussed alignment ring 46 and the manner in which the flange 10 is coupled to the flange 12. In particular, flange 10 is coupled to the flange 12 utilizing offset dowels 66 and 68. These offset dowels 66 and 68 ensure that the bearing cartridge together with the motor can only be inserted into the barrel 2 in one way and with always exactly the same positional relationship to the end of the barrel. Accordingly, the alignment ring 46 and the dowel coupling means provided in the flanges 10 and 12 ensure the proper alignment and the slightly above center position for the end 64 of the auger shaft 48. In the preferred construction, the end 64 should be .005 to .0010 of an inch above the center line of the barrel 2. In addition, to ensure stability of that portion of the auger shaft 48 which is unsupported in the barrel 2, it is preferable that the length of the unsupporting portion of the auger shaft 48 be not too long relative to the supported portion located between the bearings 50 and 52. Dimensionally the length of the unsupported portion of the auger shaft 48 should be one to two times longer than the distance between the bearings 50 and 52 and preferably 1.5 times the distance between the bearings 50 and 52.

The auger 62 consists of a plurality of auger flights all having the same pitch. The auger flights extend from slightly behind the hopper 6 towards the discharge end of the barrel 2. How far the auger flights extend towards the end of the barrel 2 will be discussed later.

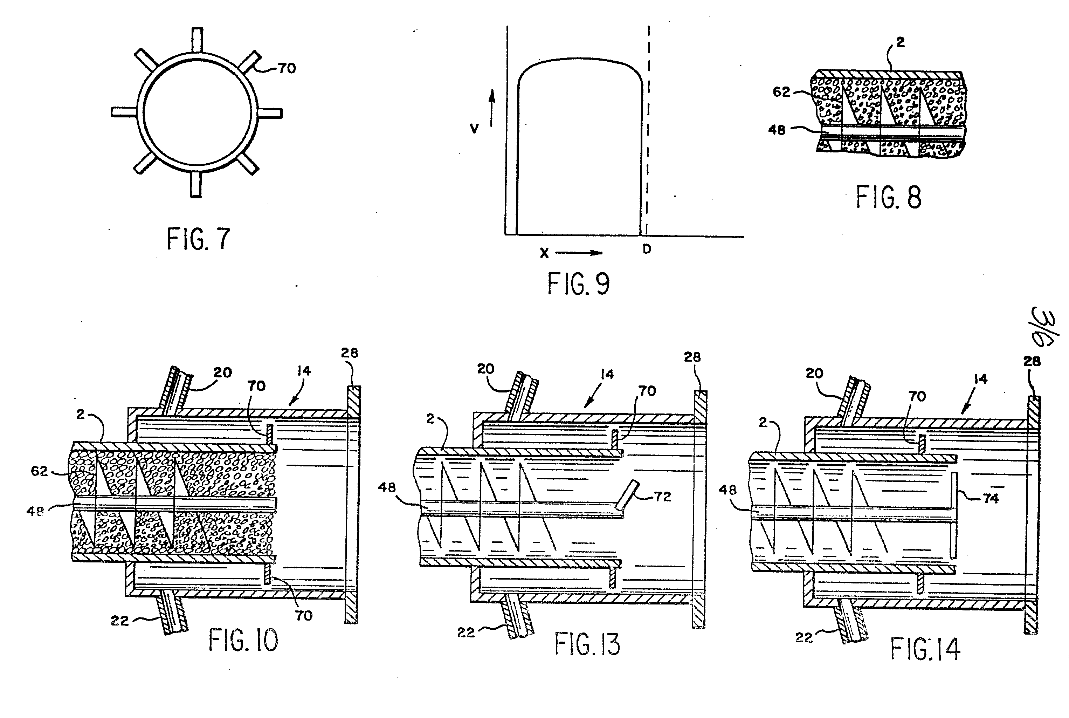

The auger barrel 2 extends into the air chamber 14. The length of the portion which extends into the air chamber 14 should be selected such that the air supplied to the air chamber 14 has sufficient space or time to form a uniform air flow around the portion of the auger barrel 2 which extends into the air chamber 14. Typically this distance is 18 to 24 inches depending upon the velocity and quantity of air flow. In addition a baffle 70 is slidably coupled to the exterior of the barrel 2 within the air chamber 14 and is provided adjacent the end of the barrel 2. The baffle can be constructed as is shown in the Figure 7. The baffle is to further stabilize the air flow and to adjust the velocity of the air flow as it reaches the end of the auger barrel 2. To further ensure that a stabilized air flow is formed completely around the end of the auger barrel 2, it is preferable that the air pipes 20 and 22 be angled backwards towards the closed end 18 of the air chamber 14. In this way air is injected towards the closed end and then moves forward to fill the area between the pipe 16 and auger barrel 2. The preferred angle for the air pipes 20 and 22 is $5^\circ$ from a line perpendicular to the pipe 16; however, it should be pointed out that it is not required

that the air pipes 20 and 22 be placed at such an angle and the apparatus of the present invention will function with the air pipes 20 and 22 perpendicular to the pipe 16 of the air chamber 14.

In operation, first the motor 8 is started to rotate the auger shaft 48 and thereby rotate the auger flights 62. The motor 8 may be an electric motor, a gasoline powered motor, a diesel motor, etc. or any other source of rotational power to drive the auger shaft 48. Typically, the auger shaft is rotated at between 900 and 3,400 revolutions per minute. The speed of rotation is set based upon the material and typically settings for materials such as rock and wheat are 1,200 revolutions per minute and 3,400 revolutions per minute respctively. Air is then supplied by the air pump 24 to the air pipes 20 and 22. The air pump supplies air at a substantially zero pressure. In addition, the air pump supplies a quantity of air which is equal to the desired air velocity in the conveying pipe 26 multiplied by the cross sectional area of the conveying pipe. Typically, the desired velocity of the air in the conveying pipe is from 5,00 to 5,500 feet per minute. Therefore, the air pump 24 has to be capable of supplying a positive volume of air and a preferred type of pump would be a variable speed displacement type pump.

The air entering the air chamber 14 via the air pipes 20 and 22 is directed towards the closed end 18 of the air chamber 14. The air hits the closed end 18 and begins to fill the air chamber 14 from the closed end 18 towards the end of the barrel 2. The baffle 70 further helps to stabilize the air flow around the auger pipe 2 and also by adjusting the position of the baffle 70 of the auger pipe 2, the velocity of the air flow as it flows around the end of the barrel 2 can be adjusted. It is important that the velocity of the air around the end of the barrel be adjusted to some predetermined velocity which will be discussed later. Since there is no material in the auger pipe 2, the air will flow not only down the conveying pipe 26 but will also come up the inside of the auger barrel 2. This flow up the inside of the barrel 2 will stop when a sufficient amount of material is introduced into the hopper 6.

Next, material is fed into the hopper 6. The material should be fed in at a rate sufficient to fill the auger 62 but not at a rate so high as to completely cover the auger 62. By not completely covering the auger 62, the material will flow smoothly towards the open end of the auger barrel 2. Referring to Figure 8, shown therein is a partial sectional view illustrating the movement of the material through the auger barrel 2. The material fills the spaces between the auger flights and is constantly moved towards the open end of the auger barrel 2. To eliminate wear of the auger barrel 2, the diameter of the flights is selected to be less than the diameter of the auger barrel. In particular, the diameter of the auger flights is selected such that the space between the end of the auger flights and the inside diameter of the auger barrel 2 is at least equal to the average diameter of the particle conveyed. Preferably, the space is 1.65 times the average diameter of the material to be conveyed. In this way, a layer of material is formed on the inside of the auger barrel 2 and acts as a wear buffer between the moving material and the inside of the barrel 2.

Referring to Figure 10, shown therein is a partial cross sectional view of the end of the auger pipe together with a cross section of the air chamber 14. As can be seen in Figure 10, as the material to be conveyed approaches the end of the auger pipe 2, the flights of the auger 62 stop. By stopping the flights at some distance from the end of the auger pipe 2, the material to be conveyed is allowed to pile up in the end of the barrel 2. As can be seen in Figure 10, the material finally sufficiently builds up to close of the end of the auger barrel 2. When this occurs, a seal is formed in the end of the auger barrel 2 which prevents the flow of air up the auger barrel 2 and forces the air to go down the conveying pipe 26. The thickness of the piled up material in the longitudinal direction of the barrel 2 which is sufficient to form a seal against the air flow is dependent upon the type of material. The coarser and drier the material, the more area is required at the end of the auger barrel 2 to allow a seal to form. Accordingly, the flights of the auger 62 should be terminated at a distance from the end of the pipe which is consistent with the size and moisture content of the material to be conveyed. In other words, larger, coarser and drier materials require that the auger flights be terminated at a greater distance from the end of the barrel 2 than finer, wet materials.

When a seal is formed by the material to be conveyed in the end of the auger barrel 2, the air supplied through the air pipes 20 and 22 is forced down the conveying pipe 26 and a distribution of the velocity curve for the air flow in the conveying pipe 26 is shown in Figure 9. D is the diameter of the conveying pipe 26 and the part shown therein is from the inside surface of one side of the conveying pipe 26 to the inside surface of the other side of the conveying pipe 26. As can be seen in Figure 9, the velocity of air adjacent the two inside surfaces of the pipe 26 is very low while the velocity in the remainder of the pipe is very high. Typically, the maximum velocity across the remainder of the conveying pipe 26 is set to be between 5,000 and 5,500 feet per minute. A preferred velocity is approximately 5,200 feet per minute. It should be further pointed out that as the result of the very low velocity air flow adjacent to the inside surface of the pipe 26, a boundary layer of smooth laminar air is formed around the inside surface of the conveying pipe 26. This boundary layer has several purposes and functions. In particular, it functions as an air bearing for the material to be conveyed; it functions as an isolation layer between the material to be conveyed and the inside surface of the pipe to prevent the material being conveyed from contacting the inside surface of the conveying pipe 26; and it functions as a means for retaining the material to be conveyed in the non-turbulent high velocity air stream.

Once the required seal is formed in the end of the barrel 2, material begins to be thrown out of the end of the barrel 2. Typically, the speed of the auger 62 is selected such that the material is thrown out of the end of the barrel 2 at a rate approximately 500 feet per minute. In addition, by adjusting the baffle 70 and the amount of air supplied by the air pump 24, the predetermined velocity of the air flow adjacent the end of the barrel 2 is set to be at least equal to the velocity of which the material is being thrown out of the end of the auger barrel 2. Preferably, the velocity of the air flow near the end of the auger barrel 2 should be at least the velocity of the material thrown out of the auger barrel 2, but no greater than 30 percent higher than the velocity of the material thrown out by the auger barrel 2. Since the velocity of the air and the material being conveyed at the end of the auger barrel is approximately 500 feet per minute and the velocity of the air inside most of the conveying pipe 26 is approximately 5,000 feet per minute, it should be apparent that the air flow accelerates in velocity from the end of the air flow in the conveying pipe 26. As the air flow accelerates, the material being conveyed also accelerates in velocity. Accordingly, the material to be conveyed is mixed with the air and is conveyed down the conveying pipe 26 as a pseudo-homogeneous gas. As a pseudo-homogeneous gas, the mixture ratio of air to material is usually between 15 to 1 to 25 to 1 by volume. The preferred ratio is 20 to 1 by volume. However, in some applications it could be hundreds to 1.

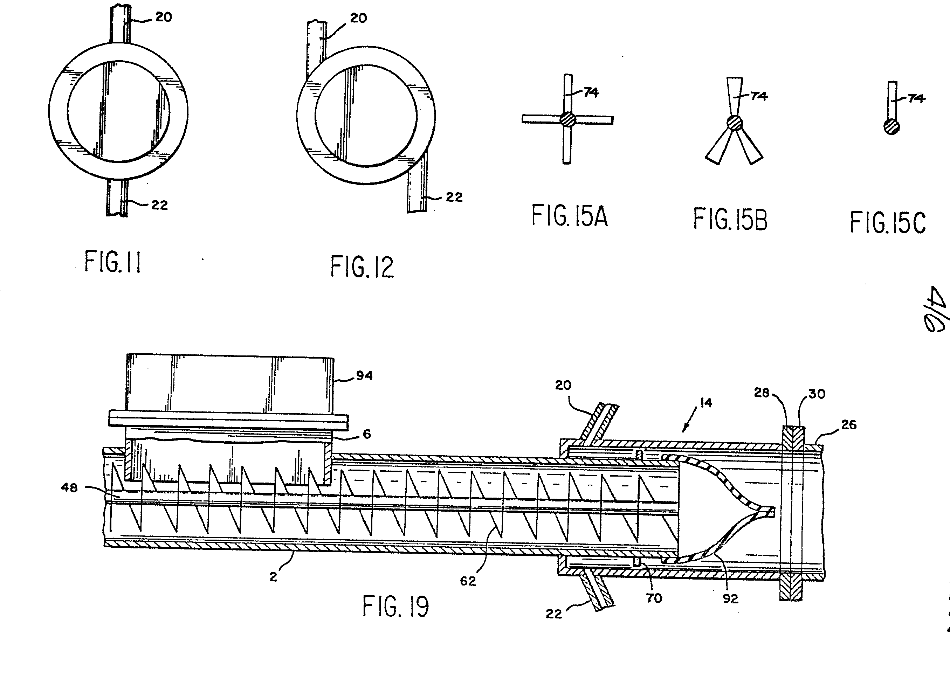

Referring to Figures 11 and 12, if the material to be conveyed is conveyed over a short distance such as less than 300 feet, the material being conveyed may be conveyed in a straight line. To achieve substantially straight flow of the material being conveyed in the conveying pipe 26, the air pipes 20 and 22 should be placed directly opposite each other. In this way, the air flow in the conveying pipe 26 will be straight which will result in a substantially straight flow of the material; however, if it is desirous to convey the material over a substantially long distance, the material being conveyed should be rifled down the conveying pipe 26 in a spiral flow. To achieve this spiral flow, the pipes 20 and 22 should be offset from each other as is shown in Figure 12. By offsetting the pipes 20 and 22, a swirling non-turbulent spiral flow of air is created around the auger pipe 2 which will pick up the material being conveyed and convey it down the pipe 26 in a spiral, rifling flow in the high velocity of air stream.

From the above description of the present invention, it should be apparent that the apparatus of the present invention has certain advantages. In particular, since the air flow is at a low pressure (less than 10psi) the conveying pipe is also not under much pressure. Therefore, the conveying pipe need only be strong enough to retain the low pressure air and be stiff enough to retain its cross-sectional area. Also, since the boundary layer is formed within the pipe 26 which confines the material being conveyed and separates it from the interior surface of the pipe 26, substantially no wear will occur to the inside of the pipe 26 and holes or leaks in the pipe 26 will have substantially no ill effects upon the flow of the material in the pipe 26. Furthermore, since the material being conveyed does not contact the inside surface of the pipe 26, many different types of materials can be pumped through the pipe 26 without contaminating the pipe 26 and therefore, contaminating the other material which is later conveyed through the pipe 26. Furthermore, since the material is being conveyed as a pseudo-homogeneous gas, the material made be conveyed horizontally, vertically, at some angle to the horizontal or vertical and can even be conveyed around corners without decreasing the flow of material or damaging the inside surface of the conveying pipe 26. Furthermore, since the conveying pipe need only be strong enough to contain the low pressure air, be rigid enough to support its cross section and does not come in contact with the material being conveyed, the conveying pipe 26 does not have to be made from an expensive strong material and can be simply plastic pipe. Furthermore, since the interior surface of the barrel 2 is lined with material being conveyed which forms a buffer between the inside surface of the barrel 2 and the remainder of the material being conveyed, wear to the inside surface of the barrel 2 is substantially reduced.

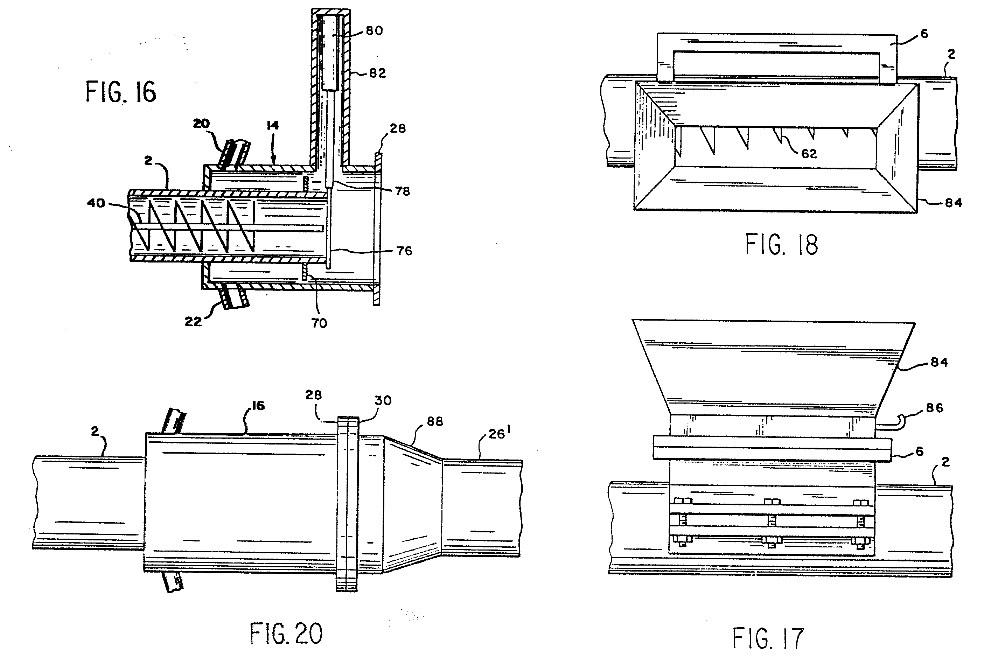

In the above description is a basic description of an apparatus in accordance with the teachings of the present invention which will convey a plurality of different types of materials. However, to increase the efficiency of the conveying apparatus to the present invention, it should be fine tuned or modified for each different type of material to be conveyed. Such modifications or fine tuning will be described in conjunction with the Figures 13 through 19.

Referring to Figure 13, if the material is granular, it may be desirable to add a beater 72 to the end of the auger shaft 48. The beater 72 should be at an angle greater than the angle of the flighting of the auger 62. The beater 72 helps to contain the granular material to create the seal in the end of the barrel 2 while also assisting in the introduction of the material being conveyed into the air flow.

Referring to Figure 14, if one desires to convey a liquid, semi-liquid or semi-solid, the liquid, semi-liquid or semi-solid must be chopped utilizing a chopper 74 provided on the end of the auger shaft 48. The chopper 74 may have one blade, two blades, three blades or four blades and they may assume any configuration as is shown by the configurations of Figures 15A through 15C. The chopper 74 chops the liquid, semi-liquid or semi-solid into particles which are then mixed with the air to form a pseudo-homogeneous gas which is conveyed down the conveying pipe 26.

Referring to Figure 16, shown therein is a configuration which is advantageous in conveying finely divided particles such as portland cement. In the Figure 16, the end of the barrel 2 and allows a seal to be formed. The flapper 76 is connected to the rod 78 of a hydraulic cylinder 80 which is provided within an air box 82 which communicates with the air chamber 14. When sufficient material builds up in the end of the barrel 2 to form a seal, the hydraulic cylinder 80 is activated to retract the piston 78 together with the removable flapper 76 into the air box 82. Once the seal is formed in the end of the barrel 2, there is no further requirement for the removable flapper 76 so long as material is continued to be fed into the hopper 6 and the apparatus continues to operate. Therefore, the removable flapper 76 is only used at an initial start up. It should be clear that flapper 76 could also be operated mechanically, electrically or pneumatically.

Furthermore, depending upon the hardness of resiliency of the material being conveyed, the point of introduction into the auger 62 may have some effect upon the efficiency.

In particular, if the materials being conveyed is very hard and or very resilient, it is advantageous to introduce the material being conveyed into only that portion of the auger 62 which is travelling away from the hopper 6. To set the feed point for the auger 62, it is desirable to provide a movable feeder 84 on the top of the hopper 6, as shown in Figures 17 and 18. The movable feeder 84 consists of a narrow hopper which is slidably coupled to the top of the hopper 6. In this way, the narrow hopper 84 can be placed so as to feed the material being fed into the preferred portion of the auger 62.

Also, as mentioned previously, it is desirable that sufficient material be supplied to the auger 62 so that the auger 62 is filled without being covered. To achieve such a result, a feed regulator 86 may be provided. The feed regulator 86 may be in the form of a movable damper or slidable valve, etc.

Referring to Figure 19, shown therein are additional features which could be utilized to fine tune the system to convey liquids containing solids or semi-solid globes. The apparatus of the present invention for this purpose can be fine tuned by the addition of a rubber boot 92 on the end of the auger barrel 2 projecting into the air chamber 44. The rubber boot 92 completely covers the end of the auger barrel 2 and tapers down to a split end. Accordingly, when liquid or semi-solid globes are supplied to the end of the auger barrel 2, the liquid is forced out through the split end of the boot 92 into the air stream. In addition, solids or globes of semi-solids are also forced by the auger 62 out through the split end of the boot 92. In this way, the split end of the boot 92 forms a seal around the globe of semi-solid material as it is injected into the air flow. In addition, the air pressure in the air chamber 14 collapses the boot 92 to prevent the flow of air up the auger barrel 2 and into the hooper 6. Furthermore, if it is desirous to submerse the conveying apparatus in order to convey a liquid such as ship bilge, the apparatus should be designed so that the motor can be submersed and a regulator mechanism or valve 94 should be applied to the hopper 6. The regulator or valve 94 would regulate the flow of the liquid with its solids or globes of semi-solids into the apparatus.

Also, for some materials the shape and condition of the auger flights may increase the efficiency. In particular, for materials which are hard, it may be desirable to provide a rough surface on the auger flights so as to increase the sliding resistance on the auger flights. Furthermore, to increase the rate of feed, the shape of the auger underneath the hopper 6 can be arranged such that the diameter of the auger flights form a taper from the back to the front as shown in Figure 6, can be stepped from the back to the front or can be tapered going right to left under the hopper 6. Such modifications can be made for the particular material to optimize the operation of the apparatus by providing a smooth feed of the material.

Referring to Figure 20, it should be apparent that in some situations it will be desirable to use a conveying pipe 26' which is the same diameter as the barrel 2. If it is desirable to use a conveying pipe 26' which is the same diameter as the barrel 2, it will be necessary to provide a tapered portion 88 between the flange 30 and the conveying pipe 26'. This tapered portion 88 should be tapered gradually so as to not upset the air flow in or create turbulence in the conveying pipe 26'. It should be further pointed out that it is undesirable for the diameter of the conveying pipe 26' to be less than the diameter of the auger barrel 2.

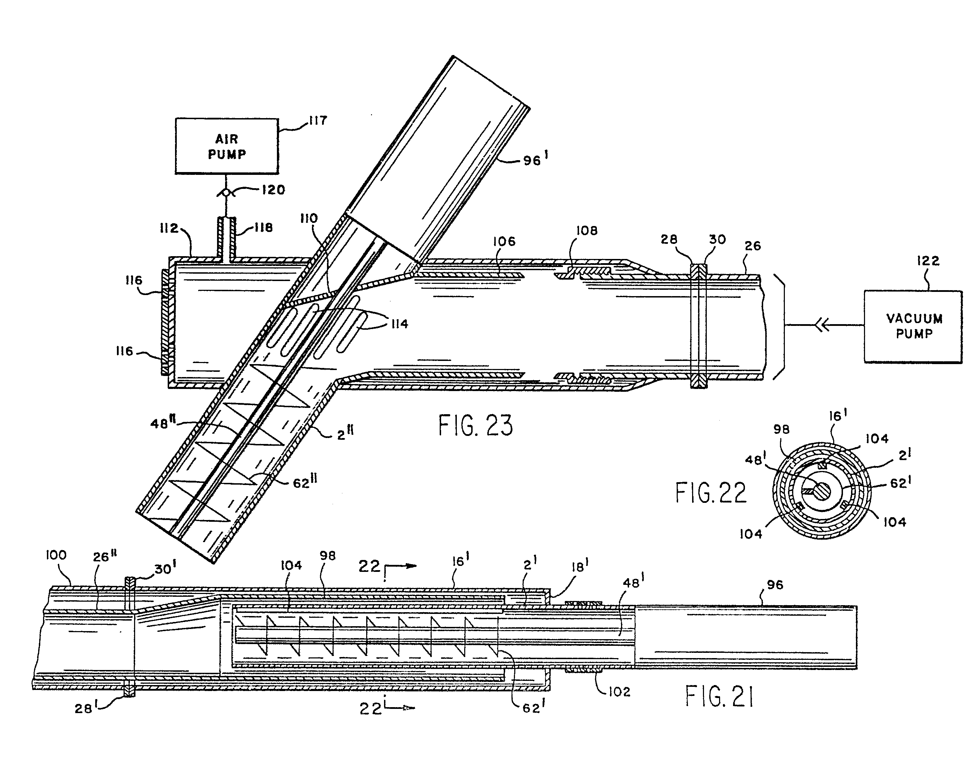

Referring to Figure 21, shown therein is a second embodiment of a conveying apparatus in accordance with the teachings of the present invention. This apparatus of Figure 21 is designed to be lowered into water wells, oil wells, and other bodies of liquids which are deep. In this embodiment, the pump includes a motor 8 and bearing cartridge 44 essentially the same as that in Figure 6 which is contained within a liquid proof housing 96. The motor drives the shaft 48' which in turn turns the auger 62' located within the auger barrel 2'. In this construction, the conveying pipe 26'' is provided within and coaxial with the pipe 16' which forms a portion of the air chamber. Another pipe 98 is provided between the barrel 2' and the pipe 16' and is connected to the conveying pipe 26''. The opposite end of the pipe 98 from the end which connects with the conveying pipe 26'' is opened and communicates with the space provided between the pipe 16' and the pipe 98. Another pipe 100 is provided around the conveying pipe 26''. The space between the pipe 100 and the conveying pipe 26'' communicates with the space between the pipe 98 and the pipe 16'. A material inlet valve 102 is provided in the auger barrel 2'. The inlet valve can be mechanically actuated, electrically actuated, hydraulically actuated or actuated in any other manner. Anti swirl bars 104 are provided every 120° around the inside surface of the auger barrel 2'. The anti-swirl bars 104 extend the full length of the auger 62' and are placed as is shown in Figure 22.

In operation, the apparatus of the present invention is lowered housing 96 end first into a well, etc. Next, the blower is turned on to supply air to the pipe 100 in the space between the pipe 100 and the conveying pipe 26''. The air or conveying fluid then flows into the space between the pipe 98 and the pipe 16' and hits the end 18'. The air flow then turns back and goes up the space between the pipe 98 and the auger barrel 2' and continues to flow up the conveying pipe 26'' in the same manner as previously described. Next, the auger motor is turned on to drive the auger 62'. At this point the inlet valve 102 is opened to allow the liquid to flow into the conveying apparatus. The liquid which flows into the conveying apparatus is forced up the barrel 2'' by the auger 62' in conjunction with the anti-swirl bars 104 and it is introduced into the air flow and conveyed up or out the conveying pipe 26''. It should be pointed out that the sequence of operation described above is very important. In particular, since the air flow pressure supplied to the conveying apparatus is very low, once the conveying apparatus is lowered below about 20 feet into a liquid, the air could not be pumped into the conveying apparatus unless the inlet valve 102 was closed and it would be impossible to get the apparatus to operate.

Referring to Figure 23, shown therein is a third embodiment of an apparatus in accordance with the teachings of the present invention. In this apparatus, there are two modes of operation. The first mode of operation is substantially the same as that of the other embodiments and shall be referred to as the positive conveying apparatus. The second mode of operation is slightly different and shall be referred to as the negative conveying apparatus. In any event, the physical construction is substantially the same except that the positive conveying apparatus uses an air pump and the negative conveying apparatus uses a vacuum pump. Furthermore, for the simplicity of description, the total construction of the conveying apparatus will be first described and then followed by description of the operation of the positive conveying apparatus.

In the construction of the apparatus of Figure 23, like elements are denoted by like reference numerals and a description of the interconnection and operation will be omitted. The apparatus further includes a pipe 106. The pipe 106 is itself provided with a valve 108 which opens and closes a circumferential slot in the pipe 106. The valve 108 is coupled to the pipe 106 via threads so that by rotating the valve 108 the longitudinal slot in the pipe 106 is opened and closed. It should be apparent that the valve 108 could be slidably coupled to the pipe 106 and actuated by some electro, mechanical or hydraulic means. The pipe 106 intersects and is coupled to the auger barrel 2''. The angle between the pipe 106 and the barrel 2'' is substantially 45$^\circ$. It is possible to use other angles but 45$^\circ$ is preferable. A deflector 110 is provided within the auger barrel 2'' and the shaft 48'' extends through the deflector 110. The deflector deflects the flow of material in the barrel 2'' through an angle of 45$^\circ$ so that it flows within the pipe 106 and down the conveying pipe 26.

A pipe 112 which is larger in diameter than pipe 106 surrounds the pipe 106 and intersects and is coupled to the auger barrel 2''. However, unlike the pipe 106, the pipe 112 does not directly communicate with the auger barrel 2'' and only communicates with the barrel 2'' via air inlet slots 114 provided in the walls of the barrel 2''. The pipe 112 further completely surrounds the pipe 106 to a point beyond the valve 108. The end of the pipe 112 is closed and is further provided with sliding valves 116. In addition, an air pump 117 is connected to the pipe 112 via an air pipe 118 and a check valve 120. Furthermore, when the apparatus of Figure 23 is used as a negative conveying apparatus a vacuum pump 122 is connected to the conveying pipe 26 and the air pipe 118 is closed and the air pump 117 is not utilized.

In operation when the apparatus is used as a positive conveying apparatus, valve 116 is closed and valve 108 is opened so that the majority of the air flow from the air pump 117 flows into the pipe 112 and through the longitudinal slot opened by the valve 108. In addition, some of the air flows through the air inlet slot 114. Next, the auger barrel 2'' is placed in the material to be conveyed. The material to be conveyed is picked up the rotating auger 62'' and moves up the auger barrerl 2''. The material then enters the area surrounded by the slots 114 and encounters the deflector 110. The air or fluid flowing through the slot 114 aerates the material to be conveyed and the deflector 110 deflects the material so that it now flows down the pipe 106. The material then reaches the longitudinal slot opened by the valve 108 and the air flow at that point picks up material to be conveyed and conveys it down the conveying pipe 26 in substantially the same manner as in the prior embodiment.

It should be pointed out again that the sequence of operation of the positive conveying apparatus of Figure 23 is essential. The air pump 117 must first be turned on or else material to be conveyed will come out of the slot 114 and be forced up the air pipe 118 and damage the air pump 117. The check valve 120 is a safety device to prevent this flow up the air pipe to damage the air pump 117.

Now, a description will be given of the negative conveying apparatus of Figure 23. To utilize the apparatus of Figure 23 as a negative conveying apparatus, the air pump 117 is turned off, the air line 118 is sealed, the valve 116 is opened and the vacuum pump 122 is connected to the conveying pipe 26 and turned on. The vacuum pump 122 draws air at the same rate at which the air pump 117 would supply it. In other words, at a rate essentially equal to the velocity of the air in the conveying pipe 26 times the cross-sectional area of the conveying pipe 26. Again, the auger barrel 2'' is inserted into the material to be conveyed and the material is drawn into the auger 62''. The valve 116 is adjusted so that approximately 80 percent of the air sucked into the apparatus by the vacuum pump 122 comes through the valve 116 while approximately 20 percent enters through the auger barrel 2'' with the material to be conveyed. The material to be conveyed then reaches the deflector 110 and is deflected down the pipe 106. As described earlier, the valve 116 is opened sufficiently so that the air flow through slot 114 aerates the material to be conveyed and sufficient air flow occurs through the longitudinal slot formed by the valve 108 to convey the material. The material is then conveyed down the conveying pipe 26 in substantially the same manner as in the prior embodiments except that due to the use of the vacuum pump 122 at the end of the conveying pipe 26, the material continues to accelerate up the conveying pipe 26 as it approaches the vacuum pump 122. Since the material being conveyed reaches its maximum velocity when it reaches the vacuum pump 122, a cyclone separator should be provided between the vacuum pump 122 and the end of the conveying pipe 26 to prevent damage to the vacuum pump 122. Also, if the negative conveying apparatus of Figures 23 is to be utilized in a submersed condition, no air will come in with the material and no air will be available to enter through the valve 116. Accordingly, a return line from the vacuum pump 122 must be provided to the valve 116 or the system will stop functioning after a short time.

Since each of the embodiments can be utilized to handle a plurality of different materials, it should be clear that those modifications and refinements described in conjunction with any of the figures can be utilized in any of the embodiments described.

It should be apparent to those skilled in the art that the above described embodiments are merely illustrative of but few of the many possible specific embodiments which represent the application of the principles of the present invention. Numerous and various other arrangements can be
readily devised by those skilled in the art without departing
from the spirit and scope of the invention.

CLAIMS:

1.      An apparatus for conveying a plurality of different types of materials in a conveying pipe comprising:

a means for supplying said material to an end of a supply conduit;

a means for creating a continuous smooth fluid flow from said supply conduit to an end of said conveying pipe, said fluid flow comprising:

a low pressure fluid flow around an entire said end of said supply conduit, said low pressure fluid flow having a predetermined fluid velocity at said end of said supply conduit;

a substantially zero velocity, thin, laminar fluid boundary layer around an inside surface of an entire length of said conveying pipe; and

a high velocity smooth fluid flow throughout a remainder of said conveying pipe, said high velocity, smooth fluid flow being surrounded by said boundary layer; and

a means for introducing said material supplied to said end of said supply conduit into said low pressure fluid flow at a predetermined volumetric  ratio of material to fluid and such that said material has a velocity in a direction of a longitudinal axis of said conveying pipe substantially equal to said predetermined fluid velocity of said low pressure fluid flow at said end of said supply conduit whereby said material is mixed with said fluid and conveyed into said high velocity fluid flow through said conveying pipe.

2.     An apparatus according to Claim 1, wherein said fluid is air.

3.     An apparatus according to Claims 1 or 2, wherein said means supplying said material to an end of said supply conduit comprises:

a cylindrical constant diameter barrel;

an input material hopper provided in said barrel;

a constant pitch helical auger provided in said barrel and extending from a point subjacent said hopper to a point adjacent an end of said barrel, a circumference of said auger being spaced at a predetermined distance from an inside surface of said barrel, said auger further including a constant diameter auger shaft which extends substantially the entire length of said barrel; and

a means for rotating said auger shaft.

4.     An apparatus according to Claim 3, wherein said means for creating a continuous smooth fluid flow comprises:

an air chamber pipe larger in diameter than said barrel and surrounding an end portion of said barrel, said air chamber pipe being closed and coupled to said barrel at one end and communicating with said conveying pipe at another end; and

a means for introducing low pressure air into said air chamber pipe such that said air forms said low pressure air flow around said entire end of said supply conduit.

5. An apparatus according to Claim 4, further comprising a baffle provided within said air chamber pipe and slidably coupled to an exterior surface of said barrel.

6. An apparatus according to Claim 4, wherein said means for introducing low pressure air comprises:

at least one air supply pipe coupled to and communicating with said air chamber pipe, said air supply pipe being provided at an angle such that said low pressure air introduced into said air chamber pipe hits said closed end and fills a space between said air chamber pipe and said barrel from said closed end to said end of said barrel; and an air pump coupled to said air supply pipe.

7. An apparatus according to Claim 6, wherein said air pump is a displacement type air pump.

8. An apparatus according to any one of Claims 3 to 7, wherein said means for rotating said auger shaft comprises:

a motor coupled to one end of said barrel and driving said auger shaft;

a bearing cartridge coupled to said motor and inserted into said barrel, said bearing cartridge rotatally supporting said auger shaft; and

an alignment ring provided within said barrel and engaging with an end of said bearing cartridge.

9.      An apparatus according to Claim 8, wherein said bearing cartridge comprises:

a cylindrical conduit coupled to said motor;

a first bearing provided within said cylindrical conduit adjacent said motor;

a second bearing for rotatably supporting said auger shaft provided within said cylindrical conduit and adjacent an end of said cylindrical conduit;

a light free seal provided between said second bearing and said end of said cylindrical conduit;

a polytetrafluoroethylene (PTFE) plate surrounding said auger shaft and engaging with said end of said cylindrical conduit; and

a flinger plate provided on said auger shaft and rotating together with said auger shaft, said flinger plate pressing said PTFE plate into engagement with said end of said cylindrical conduit.

10.     An apparatus according to Claim 9, wherein a length of said auger shaft from said end of said bearing cartridge to said end of said barrel is one to two times the length of said auger shaft between said first and second bearings.

11.     An apparatus according to Claim 10, wherein said length of said auger shaft extending from said end of said bearing cartridge to said end of said barrel is 1.5 times the distance between said first and second bearings.

12.    An apparatus according to any one of Claims 3 to 11, further comprising a barrel cradle and straightener supporting said barrel and coupled to said hopper, said cradle and straightener comprising:

a pair of rigid side plates spacedapart a distance substantially equal to an outer diameter of said barrel; and

a plurality of rigid gussets extending transversely between said side plates, a top surface of each of said gusset plates lying in a single plane, said gussets engaging with said barrel and straightening said barrel when said hopper is coupled to said cradle and straightener.

13.    An apparatus according to Claim 8, or any one of Claims 9 to 12 as appendant to Claim 8, wherein said bearing cartridge, alignment ring and motor are arranged and configured such that a central axis at an end of said auger shaft is displaced in a direction towards said hopper from a central axis of said barrel.

14.    An apparatus according to any one of Claims 3 to 13, wherein said auger shaft is provided at its end with a beater.

15.    An apparatus according to any one of Claims 3 to 13, wherein the auger shaft is provided at its end with a shredder.

16.    An apparatus according to any one of Claims 3 to 15, wherein said predetermined distance that said circumference of said auger is set from the interior surface of said barrel is 1.65 times the average diameter of material to be conveyed.

17.    An apparatus according to any one of Claims 3 to 13, further comprising a rubber boot having a split end coupled to said end of said barrel.

18.    An apparatus according to any one of Claims 3 to 17, further comprising a feed regulator provided on said hopper.

19.    An apparatus according to any one of Claims 3 to 18, further comprising a means for setting the place where the material to be conveyed is introduced into the auger.

20.    An apparatus according to any one of Claims 3 to 13, 16, 18 and 19, further comprising:
    an air box communicating with said air chamber;
    a movable flap for closing said end of said barrel; and
    means provided in said air box for moving said movable flap from a position wherein said movable flap closes said end of said barrel to a position wherein said end of said barrel is completely opened.

21.     An apparatus according to Claim 6 or any of Claims 7 to 20 as appendant to Claim 6, wherein at least two air supply pipes are coupled to said air chamber pipe and to said air pump.

22.     An apparatus according to Claim 21, wherein said two air supply pipes are provided on opposite sides of said air chamber pipe and oppositely displaced from a central axis of said air chamber pipe.

23.     An apparatus according to Claim 2, wherein:

said means for supplying said material to an end of said supply conduit comprises:

a barrel;

a variable valve means provided in said barrel to allow material to be conveyed to enter said barrel;

an auger having constant pitch auger flights and an auger shaft which extends substantially a length of said barrel; and

a means for rotating said auger shaft; and

said means for creating an air flow comprises:

a first conduit surrounding said barrel and open at both ends, one end for being coupled to said conveying pipe;

a second conduit surrounding said first conduit and said barrel, one end of said second conduit being closed and coupled to said barrel;

a third conduit surrounding said conveying pipe and coupled to said second conduit; and

a means for introducing low pressure air in a space between said third conduit and said conveying pipe, said low pressure air flowing through said space between said conveying pipe and third conduit, through a space formed between said first conduit and said second conduit, and through a space between said barrel and said first conduit.

24.     An apparatus according to Claim 23, further comprising at least one anti-swirl bar provided on an inside surface of said barrel adjacent said auger.

25.     An apparatus according to Claim 23 or 24, wherein said means for rotating said auger shaft comprises:

a motor coupled to one end of said barrel and driving said auger shaft;

a bearing cartridge coupled to said motor and inserted into said barrel, said bearing cartridge rotatably supporting said auger shaft; and

an alignment ring provided within said barrel and engaging with an end of said bearing cartridge.

26.     An apparatus according to Claim 25, wherein said bearing cartridge comprises:

a cylindrical conduit coupled to said motor;

a first bearing provided within said cylindrical conduit adjacent said motor;

a second bearing for rotatably supporting said auger shaft provided within said cylindrical conduit and adjacent an end of said cylindrical conduit;

a light free seal provided between said bearing and said end of said cylindrical conduit;

a PTFE plate surrounding said auger shaft and engaging with said end of said cylindrical conduit; and

a flinger plate provided on said auger shaft and rotating together with said auger shaft, said flinger plate pressing said PTFE plate into engagement with said end of said cylindrical conduit.

27.      An apparatus according to Claim 2 wherein:

said means for supplying said material comprises:

a barrel of constant diameter;

an auger provided within said barrel, said auger being provided with an auger shaft;

a means for rotating said auger shaft;

a first conduit intersecting said barrel and communicating with an interior of said barrel, said first conduit for being coupled to said conveying pipe;

a variable air valve provided in said first conduit; and

a deflector provided in said barrel, adjacent intersection of said first conduit with said barrel, said deflector for deflecting material being conveyed in said barrel into said first conduit; and

said means for creating a continuous air flow comprises:

a second conduit intersecting said barrel and surrounding said first conduit, said second conduit being closed at one end and being sealed to said first conduit at another end;

a valve means provided in said closed end of said second conduit; and

air slots provided in said barrel whereby an interior of said barrel communicates with an interior of said second conduit.

28. An apparatus according to Claim 27, wherein said means for creating said air flow further comprises a means for supplying air coupled to said second conduit.

29. An apparatus according to Claim 27, wherein said means for creating an air flow comprises a vacuum pump coupled to said conveying pipe.

30. A method for conveying a plurality of different types of materials in a conveying pipe comprising:

supplying a material to be conveyed to an end of a supply conduit;

creating a low pressure air flow around an entire end of said supply conduit, said low pressure air flow having a predetermined air velocity at said end of said supply conduit;

creating a substantially zero velocity, thin, laminar air boundary layer around an inside surface of an entire length of said conveying pipe;

creating a smooth high velocity air flow throughout a remainder of said conveying pipe, said high velocity air flow being surrounded by said boundary layer; and

introducing said material to be conveyed into said low pressure air flow at a predetermined volumetric ratio of material to air and at a predetermined velocity substantially equal to said predetermined velocity of said low pressure air flow at said end of said supply conduit whereby said material to be conveyed is mixed with said low pressure air and conveyed into said high velocity air flow and through said conveying pipe.

FIG. 3

FIG. 2

FIG. 5

AIR PUMP

FIG. 1

1/6

FIG. 6

FIG. 4

FIG. 7

FIG. 9

FIG. 8

FIG. 10

FIG. 13

FIG. 14

0094811

FIG. 11

FIG. 12

FIG. 15A

FIG. 15B

FIG. 15C

FIG. 19

4/6

0094811

FIG. 18

FIG. 17

FIG. 16

FIG. 20

AIR PUMP

117

120

118

112

110

96¹

116

116

106

108

28

30

26

122

VACUUM PUMP

114

48¹¹

2¹¹

62¹¹

FIG. 23

98

16¹

104

48¹

2¹

62¹

104

104

FIG. 22

100

26¹¹

30¹

104

98

22

16¹

2¹

18¹

48¹

96

28¹

22

62¹

102

FIG. 21

0094811